# EUROPEAN PATENT APPLICATION

(11) **EP 0 549 809 A1**
(43) Date of publication of application: **07.07.1993**
(21) Application number: 92915773.3
(22) Date of filing: 20.07.1992
(51) Int. Cl.: B29C 69/02, B29D 31/00, B29C 43/18, B29C 43/20

(54) **METHOD OF MANUFACTURING LAMINATED MOLDING**

(30) Priority: 18.07.1991 JP 178181/91
(71) Applicant: SUMITOMO CHEMICAL COMPANY LIMITED, Osaka-shi, Osaka 541 (JP); NISSEN CHEMITEC CORPORATION, Niihama-shi, Ehime-ken (JP)
(72) Inventor: HARA, Takahisa, Kawanishi-shi, Hyogo 666-01 (JP); MATSUMOTO, Masahito, Ibaraki-shi, Osaka 567 (JP); FUJITA, Hiromu, Ashiya-shi, Hyogo 659 (JP); KAMIJI, Yuji, Yokkaichi-shi, Mie 512 (JP); NAKATSUKA, Hiromasa, Mie-gun, Mie 510-12 (JP)
(74) Representative: VOSSIUS & PARTNER
(86) International application number: JP9200922
(87) International publication number: WO9301929

(57) **Abstract**

A method of manufacturing laminated molding using a skin material preliminarily shaping device having a male mold and a female mold and a laminate molding device, comprising: (1) a process of preliminarily shaping a skin material; (2) a process of transferring the skin material to the molding device in a state where the skin material thus preliminarily shaped is held by the female mold or the male mold for preliminarily shaping, and fitting and setting the same into a male mold or a female mold for molding; (3) a process of supplying thermoplastic resin to serve as a core material layer in a molten state, and pressurizing, cooling and shaping the same; and (4) a process of opening the male and female molds for molding and taking out the laminated molding. Positioning of the skin material can be accurately carried out with a simplified method and even a deeply drawn laminated molding having a complicated shape in three dimensions can be given an outstanding appearance without damage to the skin material.

## Description

### FIELD OF THE INVENTION

The present invention relates to a process for producing a multilayer molded article which comprises a thermoplastic resin body and a skin material which is laminated thereon.

### DESCRIPTION OF THE PRIOR ART

A large number of plastic molded articles are used in many fields including the automobile and domestic electric appliance fields because of their low costs, free moldability and light weight. However, they have some drawbacks that they have poor appearance and cool feeling and tend to be easily flawed. Then, it is highly desired to impart decoration and soft feeling to the plastic molded articles. Hitherto, to impart decoration to the plastic molded article, there have been many methods for producing a multilayer molded article comprising a thermoplastic resin body and a skin material which is laminated thereon.

For example, there is known a method comprising forming a core layer by injection molding, applying an adhesive to the core layer and bonding a skin material by vacuum or pressure forming. This method includes a large number of steps and requires a high production cost, and it is difficult to use this method for laminating the skin material only on a part of the core layer.

As a method for simultaneously forming the core layer and laminating the skin material thereon in the molds, there is known a method comprising clamping peripheral parts of the skin material with a skin material-fixing plate and a fixed mold, supplying a resin melt in a mold cavity and forming a three-dimensional article by the resin pressure simultaneously with the lamination of the skin material or a method comprising supplying a skin material which has been preshaped and trimmed in a separate system, fixing the skin material by suction force with vacuum holes provided in the mold, supplying the resin melt and forming it.

However, by the former method, corner parts or rising parts of the molded article tend to have impaired appearance, and by the latter method, the positioning of the skin material is difficult. In these methods, it may be necessary to treat the edges of skin material in a separate step, and these methods cannot be applied when the skin material is laminated only on a part of the article.

### SUMMARY OF THE INVENTION

The present invention intends to solve the above problems of the above conventional methods and an object of the present invention is to provide a method for producing a multilayer molded article by a simple streamlined molding process, whereby the skin material is beautifully finished and has high quality at its corner parts, rising parts and peripheries.

As a result of extensive study to solve the above problems, it has been found that the above object is accomplished when two pairs of molds are effectively used in a specific manner with a skin material-shaping apparatus and a molding apparatus, and the present invention has been completed.

The present invention provides a method for producing a multilayer molded article which comprises a core resin layer and a skin material laminated on the core resin layer, the method using a skin material-shaping apparatus having a pair or skin material-shaping male and female molds and a molding apparatus having a pair of molding male and female molds having substantially the same shape as that of the skin material-shaping molds and comprising the following steps (1) to (6):
(1) preshaping a skin material by the skin material-shaping molds, and maintaining the preshaped skin material on a mold surface of either one of the skin material-shaping male and female molds,
(2) transferring the skin material-shaping mold carrying the skin material to the molding apparatus, and fitting the skin material-shaping mold in the molding mold having a shape corresponding to said shaping mold,
(3) freeing the skin material from the skin material-shaping mold, transferring the skin material to a surface of the molding mold and fixing it thereto,
(4) freeing the skin material-shaping mold from the molding mold, and returning the skin material-shaping mold to the skin material-shaping apparatus,
(5) supplying a resin in a molten state in a space between the molding mold to which the skin material is fixed and the other half of molding molds, pressing and cooling the molding molds to form the multilayer molded article, and
(6) opening the molding molds and removing the multilayer molded article.

### BRIEF DESCRIPTION OF THE DRAWINGS

Fig. 1 shows one embodiment of the apparatuses used in the method of the present invention,
Fig. 2 shows the steps for preshaping the skin material in the method of the present invention,
Fig. 3 shows preshaping of the skin material and molding of the multilayer article in the method of the present invention,
Fig. 4 shows preshaping of the skin material and molding of the multi layer article in the method of the present invention,
Fig. 5 shows preshaping of the skin material and molding of the multilayer article in the method of the present invention,
Fig. 6 shows preshaping of the skin material and molding of the multilayer article in the method of the present invention,
Fig. 7 shows preshaping of the skin material and molding of the multilayer article in the method of the present invention,
Fig. 8A shows a perspective view of the multilayer molded article produced in Example 1 of the present invention, and Fig. 8B is a cross sectional view along the line A-A of Fig. 8A,
Fig. 9 is a vertical cross sectional view of the molds in the molding step in Example 1 of the present invention, and
Fig. 10A shows a perspective view of the multilayer molded article produced in Example 1 of the present invention, and Fig. 10B is a cross sectional view along the line A-A of Fig. 10A.

### DETAILED DESCRIPTION OF THE INVENTION

As a thermoplastic resin used for forming the core layer in the present invention, any one of conventional thermoplastic resins which are used in compression molding, injection molding and extrusion molding can be used. Specific examples are foamable or nonfoamable thermoplastic resins (e.g. polypropylene, polyethylene, polystyrene, acrylonitrile-styrene-butadiene block copolymer, polyamide, etc.) and foamable or nonfoamable thermoplastic elastomers (e.g. ethylene-propylene block copolymer, styrene-butadiene block copolymer, etc.). It is possible to use the thermoplastic resin containing at least one additive, for example, a filler such as an inorganic filler and glass fiber; a pigment; a lubricant; and an antistatic agent.

Examples of the skin material to be used in the method of the present invention are woven or nonwoven fabric, a net of metal, fiber or a thermoplastic resin, a paper or a metal foil which is lined with a sheet for vacuum sucking; and a sheet or film of a thermoplastic resin and a thermoplastic elastomer, and the like. These skin materials may be ornamented by uneven design such as emboss, printing or dyeing. The skin material may be made of a foam. Further, the skin material may be a laminate of two or more of them which are bonded with, for example, an adhesive.

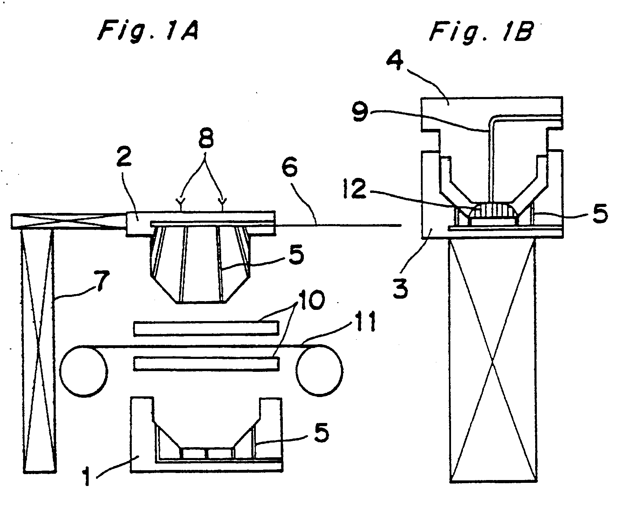

An embodiment of the molding method of the present invention will be explained by making reference to Figs. 1-6.

Fig. 1 schematically shows the apparatuses for carrying out the method of the present invention. Fig. 1A shows the skin material-shaping apparatus and Fig. 1B shows the molding apparatus. In this embodiment, while the skin material is preshaped by the skin material-shaping apparatus of Fig. 1A, the multilayer article is molded by the molding apparatus of Fig. 1B using the preshaped skin material obtained in the previous step.

In these apparatuses, there are used skin material-shaping molds 1, 2 and molding molds 3, 4 which have thin holes 5 for vacuum suction or pressurization to hold or free the skin material 11, whereby the skin material 11 is suitably held by suction or freed by pressurizing. The male mold 2 of the skin material-shaping molds can be transferred into the molding apparatus using, for example, a moving rail 6, and can be vertically moved by an air cylinder 7. In this embodiment, the male mold 2 of the skin material-shaping molds which holds the preshaped skin material is transferred to the molding apparatus and fit in the female mold 3 of the molding molds. Then, the skin material is transferred onto the surface of the female mold of the molding molds and fixed thereto. To this end, the surface of the female mold of the molding molds has a shape corresponding to the shape of skin material 11 which is suction held on the male mold of the skin material-shaping molds.

In this embodiment, the upper male mold 4 is fixed, while the female mold 3 vertically moves. In the open state of the molds, the male mold 2 of the skin material-shaping molds can be inserted between the molding molds.

The above construction is only one example of the present invention, and the molds can be freely positioned as desired.

For preshaping, while the skin material 11 may be directly preshaped in some cases, it is preferably preheated with a preheater which can be provided at any place to a temperature at which the skin material can be preshaped. In Fig. 1, the preheater 10 is provided between the pair of preshaping molds, and removed away when the molds are moved.

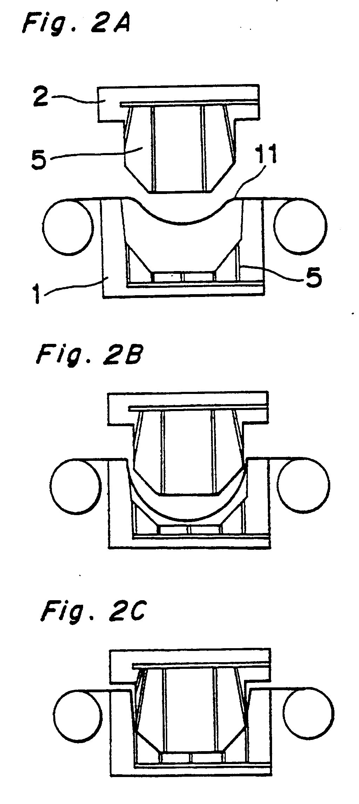

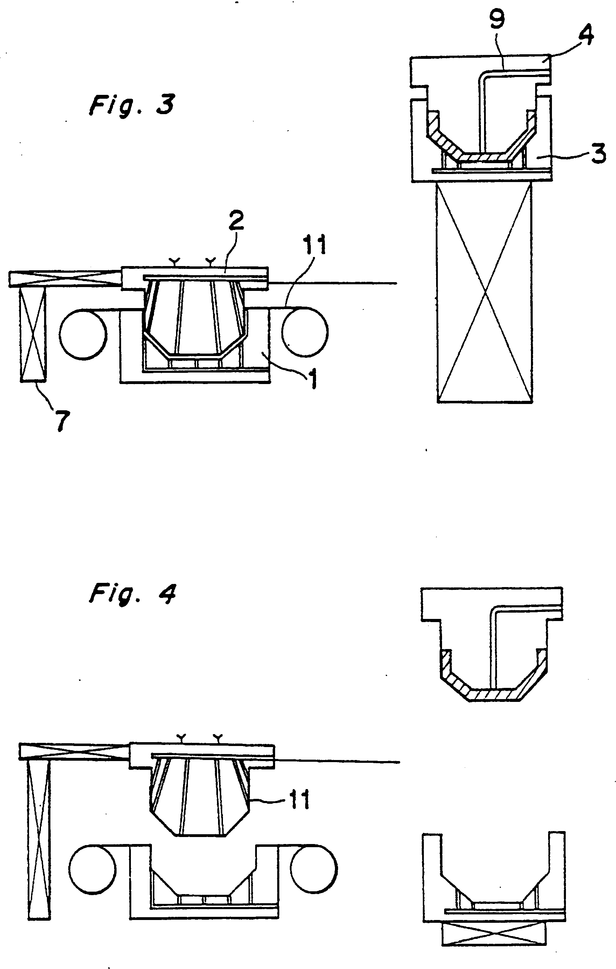

The preheated skin material 11 is drawn by suction through the thin holes opening on the mold surface of the female mold 1, and simultaneously a pressurized air is blown onto the skin material 11 through the thin holes 5 in the male mold 2 (Fig. 2A). Then, the male mold 2 is lowered with inflating the skin material towards the female mold 1 (Fig. 2B). When the skin material 11 is blown to substantially the size substantially equal to the depth of the female mold, the suction of the skin material through the thin holes in the female mold 1 is stopped, and the pressurized air blowing through the hole in the male mold 2 is changed to vacuum suction (Fig. 2C and Fig. 3). When the male mold 2 is further lowered, the skin material is compressed and preshaped between the male and female molds and adhered to the mold surface of the male mold 2.

In the preshaping step, when the skin material is continuously supplied to the molding molds, each piece of the skin material, which is for example in a rolled form, is cut in a desired shape and trimmed (Fig. 4). In such case, when the skin material is a heat meltable one, heat cutters are provided at desired cutting positions around almost entire periphery of the male mold 2, and the skin material is molten, cut and trimmed in the desired shape by applying an electric current through the heat cutters and heating a part of the skin material to a temperature higher than the melting point of the material. In the case of non-heat meltable skin material, a suitable mechanical cutter is provided to cut and trim the skin material in a desired shape.

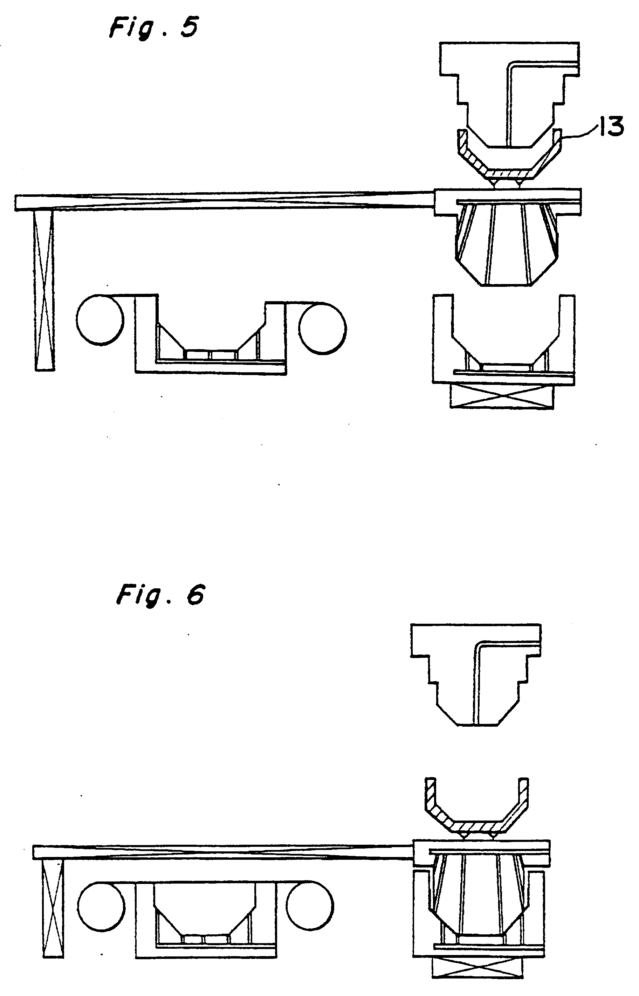

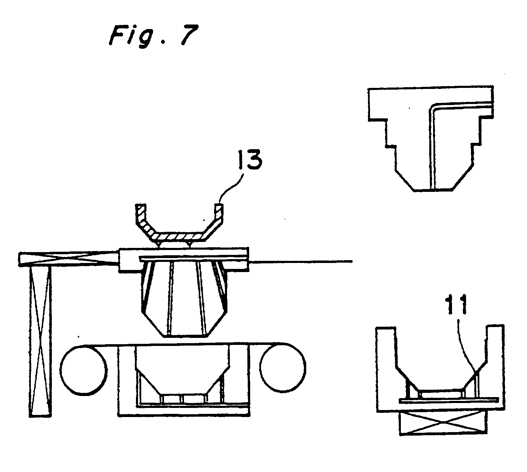

Thereafter, the mold is opened and the male mold 2 of the skin material-shaping molds on which the preshaped skin material is adhered and held is transferred to the predetermined position between the molding molds of the molding apparatus (Fig. 5). Then, the male mold 2 of the skin material-shaping molds is lowered or the female mold 3 of the molding molds is lifted up to fit them together. The vacuum suction of the skin material through the thin holes in the male mold 2 is stopped and simultaneously, the vacuum suction is started through the thin holes in the female mold 3 of the molding molds (Fig. 6). Thereby, the preshaped skin material is removed from the male mold 2 of the skin material-shaping molds and transferred to and held by the female mold 3 of the molding molds (Fig. 7).

After the transfer of the skin material, the vacuum suction through the thin holes in the female mold 3 of the molding molds is stopped at any stage before the supply of the resin.

The male mold 2 of the skin material-shaping molds from which the skin material has been removed is moved outside the molding apparatus (Fig. 7), and the female mold 3 carrying the skin material is lifted up to a predetermined position so as to carry out press molding for the production of multilayer molded article in combination with the male mold 4 which is fixed above the female mold 3.

Through a resin conduit 9 provided in the male mold 4 of the molding molds, a molten resin 12 is supplied in a space between the skin material and the mold surface of the male mold 4 of the molding molds, and simultaneously the female mold 3 is further lifted up to a predetermined position (Fig. 1B) to pressurize the resin, followed by cooling to shape the multilayer molded article (Fig. 3). When the female mold 3 is lowered, the multilayer molded article is held on the male mold 4 (Fig. 4). The multilayer molded article can he removed by suction cups 8 provided on the male mold 2 of the skin material-shaping molds, when the male mold 2, which carries the skin material for the subsequent molding to the molding female mold, returns to the skin material-shaping apparatus (Figs. 5, 6 and 7).

In the molding method of the present invention, for preventing damage of the skin material 11, ti is important that the of supply of the molten resin 12 is properly timed to the closing of the molds in the molding apparatus are important. To this end, preferably the molten resin is supplied through the resin conduit 9 provided in the upper mold at a mold closing rate of 30 mm/sec. or less, when a clearance between the upper and lower molds is from (C + 5) to (C + 100) mm in which C is a mold clearance at the completion of molding. Thereafter, the molds are closed till the clearance reaches C mm, compressed for a predetermined time and cooled to obtain the desired multilayer molded article.

As explained above, the method of the present invention is carried out using the two apparatuses, namely the skin material-shaping apparatus and the molding apparatus. By the skillful combination of the shaping of skin material and the molding of multilayer molded article, the shaping of skin material and the molding of molded article are carried out simultaneously, whereby the multilayer molded article can be produced very efficiently.

The method for producing the multilayer molded article according to the present invention has the following advantages:
(1) Since the skin material is preshaped and laminated, a deep drawn article having a complicated three dimensional shape with good appearance can be obtained without leaving wrinkles or breakage in the skin material.
(2) Since the skin material is trimmed on the preshaping molds and transferred while being adhered and held thereon and then adhered and fixed on the molding mold, it is accurately positioned.
(3) Since the molding pressure is between 20 and 90 kg/cm² which is much lower than a molding pressure in injection molding, the skin material is not damaged during molding so that the multilayer molded article having good appearance is easily produced.
(4) The steps of preshaping the skin material, trimming it, transferring it to the molding apparatus, positioning and fixing it, and removing the molded article are carried out accurately and efficiently, and the production process can be automated.
(5) Since the preshaping of skin material and the molding of multilayer molded article are carried out simultaneously, the multilayer molded articles can be produced efficiently.

### EXAMPLES

The present invention will be illustrated by the following Examples which will not limit the scope of the present invention.

### Example 1

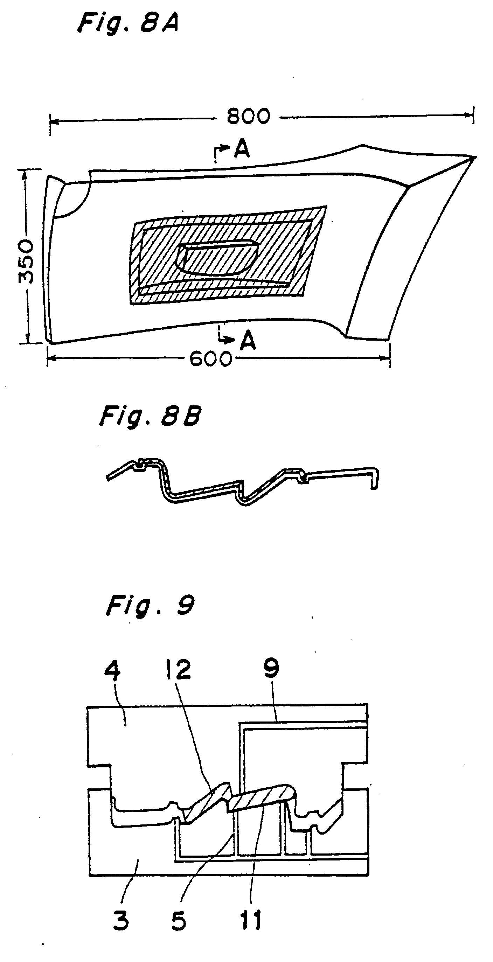

This Example explains the molding process using the molds with which a molded article shown in Figs. 8A and 8B is formed and which are set in a pressing machine having a clamping force of 300 tons.

As a skin material, was used a rolled sheet consisting of an embossed polyvinyl chloride sheet having a thickness of 0.4 mm (manufactured by Kyowa Leather Co., Ltd.) and a polypropylene foam having a thickness of 3.0 mm (manufactured by Toray ; an expansion ratio of 15) which were bonded together with an adhesive.

The skin material 11 which was positioned between the skin material-shaping female and male molds 1, 2 was preheated to 150°C with a preheater. While the skin material 11 was drawn by vacuum suction through the thin holes in the female mold 1 and simultaneously the pressurized air was blown to the skin material 11 through the thin holes in the male mold 2, the male mold 2 was lowered for preshaping the skin material 11. When the vacuum suction through the thin holes in the female mold 1 was stopped, the air blowing through the male mold 2 was changed to vacuum suction, and the male mold 2 was further lowered, the preshaped skin material 11 was adhered onto the surface of the male mold 2. At this stage, the skin material 11 was cut out from the rolled material by melting cut-lines with the heat cutter provided at the predetermined positions around almost entire periphery of the male mold 2, and trimmed in the desired shape.

The skin material-shaping male mold 2 carrying the adhered skin material 11 on its surface was transferred to the apparatus for molding the multilayer molded article and fitted to the molding female mold 3. The vacuum suction in the skin material-shaping male mold 2 was stopped and the skin material was drawn by vacuum suction through the thin holes in the molding female mold 3, whereby the skin material was fixed and held at a desired position on the molding female mold 3.

The female mold 3 was lifted up at a rate of 10 mm/sec. When the clearance between the upper and lower molds was 30 to 20 mm, a resin melt 12 of polypropylene (Sumitomo Noblen BPZ 5077 manufactured by Sumitomo Chemical Co., Ltd.; containing 15 % of talc; Melt flow index of 40 g/10 min.) which was heated at 200°C was supplied through the resin conduit 9 in the male mold 4 in a space between the skin material 11 and the male mold 4, and the molds were compressed under molding pressure of 80 kg/cm² and cooled to shape the resin and obtain a multilayer molded article having a thickness of 3.5 mm. The produced article had beautiful appearance with no breakage or wrinkle of the skin material.

### Example 2

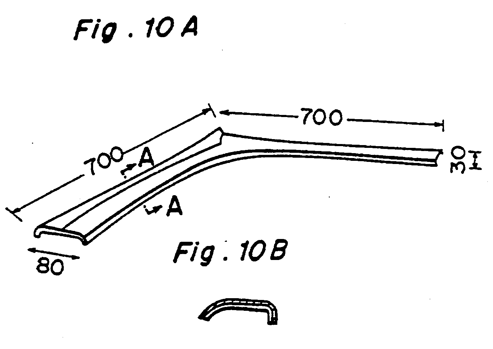

In this Example, the molding was carried out by setting the molds with which a molded article shown in Figs. 10A and 10B was formed in a pressing machine having a clamping force of 300 tons.

As a skin material 11, a polyolefin elastomer sheet (polypropylene-EPDM composite material) having a thickness of 0.4 mm was used.

In the same manner as in Example 1, the skin material 11 was preshaped in the desired manner and its edges were trimmed.

The skin material-shaping male mold 2 carrying the adhered skin material 11 on its surface was transferred to the apparatus for molding the multilayer molded article and fitted to the molding female mold 3. The vacuum suction with the skin material-shaping male mold 2 was stopped and the skin material was drawn by vacuum suction through the thin holes in the molding female mold 3, whereby the skin material was fixed and held at a desired position on the molding female mold 3.

The female mold 3 was lifted up at a rate of 20 mm/sec. When the clearance between the upper and lower molds was 15 to 10 mm, the same molten polypropylene as used in Example 1 was supplied through the resin conduit 9 in the male mold 4 in a space between the skin material 11 and the male mold 4, and the molds were compressed under molding pressure of 80 kg/cm² and cooled to shape the resin and obtain a multilayer molded article having a thickness of 2.0 mm. With the produced product, no treatment of the edges of the skin material was necessary, and the article had beautiful appearance with no breakage or wrinkle of the skin material.

## Claims

1. A method for producing a multilayer molded article which comprises a core resin layer and a skin material laminated on the core resin layer, the method using a skin material-shaping apparatus having a pair of skin material-shaping male and female molds and a molding apparatus having a pair of molding male and female molds having substantially the same shape as that of the skin material-shaping molds and comprising the following steps (1) to (6):
(1) preshaping a skin material by the skin material-shaping molds, and maintaining the preshaped skin material on a mold surface of either one of the skin material-shaping male and female molds,
(2) transferring the skin material-shaping mold carrying the skin material to the molding apparatus, and fitting the skin material-shaping mold in the molding mold corresponding to said shaping mold,
(3) freeing the skin material from the skin material-shaping mold, transferring the skin material to a surface of the molding mold and fixing it thereto,
(4) freeing the skin material-shaping mold from the molding mold, and returning the skin material-shaping mold to the skin material-shaping apparatus,
(5) supplying a resin in a molten state in a space between the molding mold to which the skin material is fixed and the other half of molding molds, pressing the molding molds, and cooling the molds to form the multilayer molded article, and
(6) opening the molding molds and removing the multilayer molded article.

2. The method for producing a multilayer molded article according to claim 1, wherein after preheating, the skin material is preshaped.

3. The method for producing a multilayer molded article according to claim 1, wherein after preshaping, the skin material is trimmed.
